# EUROPEAN PATENT SPECIFICATION

(11) **EP 2 502 135 B1**
(45) Date of publication and mention of the grant of the patent: **27.06.2018**
(21) Application number: 10777142.0
(22) Date of filing: 19.10.2010
(51) Int. Cl.: G06F 3/0485

(54) **METHOD OF SCROLLING ITEMS ON A TOUCH SCREEN USER INTERFACE**
VERFAHREN ZUM SCROLLEN VON OBJEKTEN AUF EINER BENUTZERSCHNITTSTELLE EINES BERÜHRUNGSBILDSCHIRMS
PROCÉDÉ POUR FAIRE DÉFILER DES ÉLÉMENTS SUR UNE INTERFACE UTILISATEUR À ÉCRAN TACTILE

(30) Priority: 17.11.2009 US 619962
(43) Date of publication of application: 26.09.2012
(73) Proprietor: Qualcomm Incorporated, San Diego, CA 92121 (US)
(72) Inventor: SCHWARTZ, Michael U., San Diego California 92121 (US)
(74) Representative: Wegner, Hans
(86) International application number: PCT/US2010/053160
(87) International publication number: WO 2011/062717

(56) References cited:
- WO-A1-2007/129247
- WO-A2-2005/015380
- US-A1- 2005 083 299
- US-A1- 2007 226 646
- US-B1- 6 747 680
- COCKBURN AND J SAVAGE A: "Comparing Speed-Dependent Automatic Zooming with Traditional Scroll, Pan and Zoom Methods", 20030901; 20030900 - 20030912, 1 September 2003 (2003-09-01), pages 87-102, XP002470224,
- Jürgen Rink: "Das Schönschrift-Windows - Windows XP Tablet PC Edition", c't Magazin, 1 July 2002 (2002-07-01), XP055341662, Retrieved from the Internet: URL:https://www.heise.de/ct/artikel/Das-Sc hoenschrift-Windows-288354.html [retrieved on 2017-02-02]
- Vasudev: "9 Touch Gestures in Windows 7 for Multi-touch Magic", , 14 October 2009 (2009-10-14), XP055341965, Retrieved from the Internet: URL:https://winliveviews.wordpress.com/200 9/10/14/9-touch-gestures-in-windows-7-for- multi-touch-magic/ [retrieved on 2017-02-03]
- Larry Larsen: "Defrag: Windows 7 Multitouch", , 14 August 2009 (2009-08-14), page 3 pp., XP054977131, Retrieved from the Internet: URL:https://channel9.msdn.com/blogs/larryl arsen/defrag-windows-7-multitouch [retrieved on 2017-02-06]

## Description

### DESCRIPTION OF THE RELATED ART

Portable computing devices (PDs) are ubiquitous. These devices may include cellular telephones, portable digital assistants (PDAs), portable game consoles, palmtop computers, and other portable electronic devices. Many portable computing devices include a touch screen interface in which a user may interact with the device and input commands. Further, the touch screen interface may be used to display multiple items, e.g., application icons, thumbnails, tiles, or a combination thereof. Many displays include scrolling functionality as a way to navigate through the items and locate specific items. Oftentimes, the scrolling functionality may cumbersome and difficult to use.

Accordingly, what is needed is an improved method of scrolling items on a touchscreen user interface.

US 2005/0083299 (A1) discloses a monitor display control apparatus and a monitor display control method, in which ease of operation of scrolling a map image can be improved with an intention of an operator being reflected at the time of scrolling the map image. A value RV corresponding to the square of a distance up to a current position centering on a reference position is operated on the basis of output voltages of potentiometers detecting a tilted position of an operating rod. In a control unit, a scrolling speed and a scale factor of the map image displayed on a display screen of a monitor television are varied in accordance with a signal UP including information on an amount of displacement of the operating rod from the reference position.

WO 2007/129247 (A1) discloses a method of displaying visual representations of a plurality of items comprising the steps of allowing a user to influence a rate of movement of the visual representations of the plurality of items and displaying the visual representations at the rate of movement. A larger amount of visual representations is displayed when the rate of movement is higher and a smaller amount of visual representations is displayed when the rate of movement is lower. The method can be performed by an electronic device, possibly enabled by a computer program product.

US 6,747,680 (B1) discloses a system and method for navigating through a content or document in a display, wherein as the rate of such navigation increases, the scale of the document decreases. Thus, more of the document is viewable in the display. One method involves receiving an input, such as a user input on an input device which may include a joystick, a mouse, a trackball, or other pointing device. The input is mapped to either a speed of navigation through a content space or scale of the content space while being navigated. The other of speed or scale to which the output was not mapped is determined according to the relationship that scale multiplied by speed equals a constant value. The content space is subsequently navigated based on the speed or scale mapped from the input and the scale or speed is determined.

US 2007/0226646 (A1) discloses a screen display apparatus including an operation information reception unit that receives operation information regarding an inclination direction and an inclination angle of a joystick from the joystick, and a screen controller that performs a scroll process for scrolling a screen and a zoom process for zooming based on the operation information. The screen controller scrolls the screen according to the inclination direction and the inclination angle of the joystick, and continues a zoom-out process for zooming-out of the screen based on a detection of the inclination angle that is greater than a predetermined angle for a predetermined period until detecting the inclination angle of the joystick to be equal to or smaller than the predetermined angle or until zooming out to a predetermined minimum zoom rate.

Vasudev, in "9 Touch Gestures in Windows 7 for Multi-touch Magic", 14 October 2009, XP055341965 (https://winliveviews.wordpress.com/2009/10/14/9-touch-gestures-in-windows-7-for-multi-touch-magic/) and Larry Larsen in "Defrag: Windows 7 Multitouch", 14 August 2009, XP054977131 (https:// channel9.msdn.com/blogs/larrylarsen/defrag-windows-7-multitouch) describe Windows 7 gestures for, inter alia, panning with inertia (for scrolling) and for zooming.

WO 2005/015380 (A2) discloses a system for scrolling through a document, comprising presentation means for presenting at least a part of a document on a display screen and scroll means for adjusting the position of the focal point in response to a user-supplied scroll command. The presentation means is adapted to automatically adjust the zoom factor in dependence upon an aspect of said scroll command, such as a duration, a repetition rate, or an intensity. The presentation means are preferably adapted to reinstate the zoom factor when a predetermined period of time has lapsed since the scroll command.

### BRIEF DESCRIPTION OF THE DRAWINGS

In the figures, like reference numerals refer to like parts throughout the various views unless otherwise indicated.
FIG. 1 is a front plan view of a first aspect of a portable computing device (PCD) in a closed position;
FIG. 2 is a front plan view of the first aspect of a PCD in an open position;
FIG. 3 is a block diagram of a second aspect of a PCD;
FIG. 4 is a first portion of a flowchart illustrating a first aspect of a method of scrolling items on a touch screen user interface commands;
FIG. 5 is a second portion of the flowchart illustrating the first aspect of a method of scrolling items on a touch screen user interface commands;
FIG. 6 is a first portion of a flowchart illustrating a second aspect of a method of scrolling items on a touch screen user interface commands;
FIG. 7 is a second portion of flowchart illustrating the second aspect of a method of scrolling items on a touch screen user interface commands;
FIG. 8 is a third portion of a flowchart illustrating the second aspect of a method of modifying commands;
FIG. 9 is a front plan view of a third aspect of a PCD;
FIG. 10 is a second front plan view of the third aspect of a PCD; and
FIG. 11 is a third front plan view of the third aspect of a PCD.

### DETAILED DESCRIPTION

The word "exemplary" is used herein to mean "serving as an example, instance, or illustration." Any aspect described herein as "exemplary" is not necessarily to be construed as preferred or advantageous over other aspects.

In this description, the term "application" may also include files having executable content, such as: object code, scripts, byte code, markup language files, and patches. In addition, an "application" referred to herein, may also include files that are not executable in nature, such as documents that may need to be opened or other data files that need to be accessed.

The term "content" may also include files having executable content, such as: object code, scripts, byte code, markup language files, and patches. In addition, "content" referred to herein, may also include files that are not executable in nature, such as documents that may need to be opened or other data files that need to be accessed.

As used in this description, the terms "component," "database," "module," "system," and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device may be a component. One or more components may reside within a process and/or thread of execution, and a component may be localized on one computer and/or distributed between two or more computers. In addition, these components may execute from various computer readable media having various data structures stored thereon. The components may communicate by way of local and/or remote processes such as in accordance with a signal having one or more data packets (*e.g.*, data from one component interacting with another component in a local system, distributed system, and/or across a network such as the Internet with other systems by way of the signal).

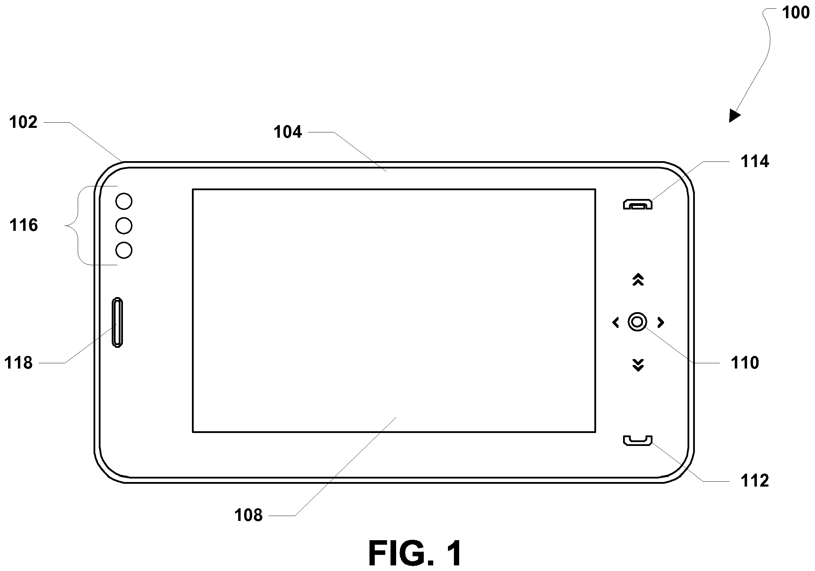

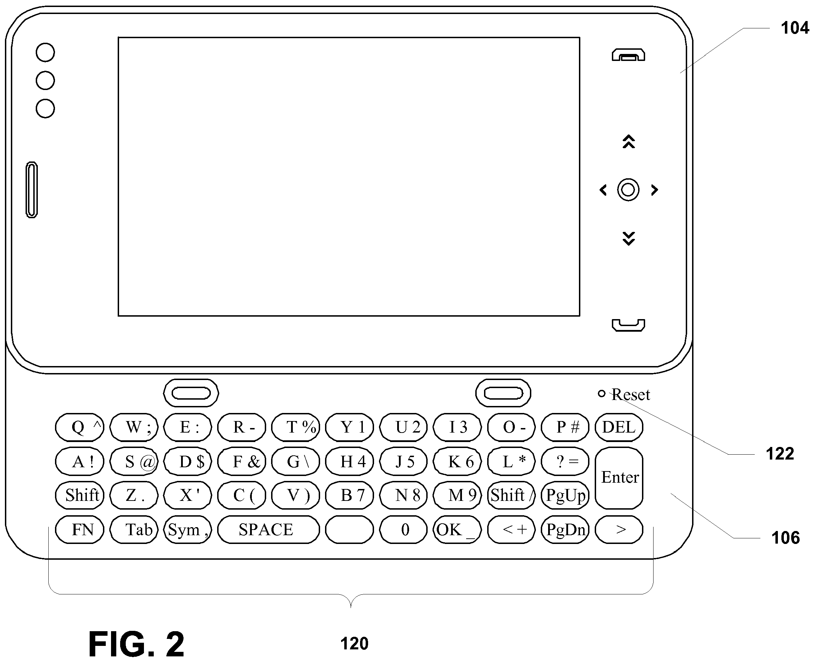

Referring initially to FIG. 1 and FIG. 2, an exemplary portable computing device (PCD) is shown and is generally designated 100. As shown, the PCD 100 may include a housing 102. The housing 102 may include an upper housing portion 104 and a lower housing portion 106. FIG. 1 shows that the upper housing portion 104 may include a display 108. In a particular aspect, the display 108 may be a touch screen display. The upper housing portion 104 may also include a trackball input device 110. Further, as shown in FIG. 1, the upper housing portion 104 may include a power on button 112 and a power off button 114. As shown in FIG. 1, the upper housing portion 104 of the PCD 100 may include a plurality of indicator lights 116 and a speaker 118. Each indicator light 116 may be a light emitting diode (LED).

In a particular aspect, as depicted in FIG. 2, the upper housing portion 104 is movable relative to the lower housing portion 106. Specifically, the upper housing portion 104 may be slidable relative to the lower housing portion 106. As shown in FIG. 2, the lower housing portion 106 may include a multi-button keyboard 120. In a particular aspect, the multi-button keyboard 120 may be a standard QWERTY keyboard. The multi-button keyboard 120 may be revealed when the upper housing portion 104 is moved relative to the lower housing portion 106. FIG. 2 further illustrates that the PCD 100 may include a reset button 122 on the lower housing portion 106.

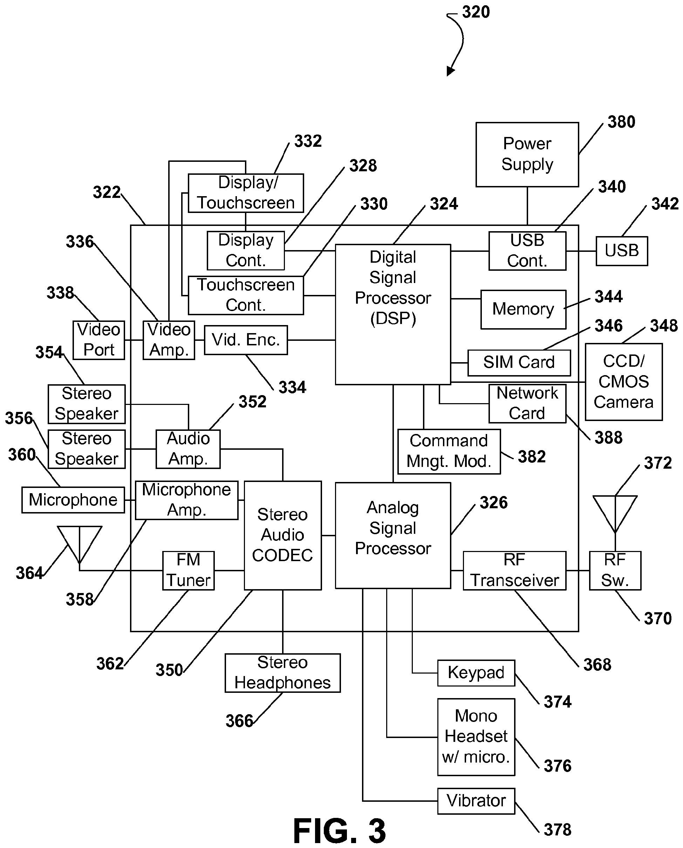

Referring to FIG. 3, an exemplary, non-limiting aspect of a portable computing device (PCD) is shown and is generally designated 320. As shown, the PCD 320 includes an on-chip system 322 that includes a digital signal processor 324 and an analog signal processor 326 that are coupled together. The on-chip system 322 may include more than two processors. For example, the on-chip system 322 may include four core processors and an ARM 11 processor, i.e., as described below in conjunction with FIG. 32.

As illustrated in FIG. 3, a display controller 328 and a touch screen controller 330 are coupled to the digital signal processor 324. In turn, a touch screen display 332 external to the on-chip system 322 is coupled to the display controller 328 and the touch screen controller 330.

FIG. 3 further indicates that a video encoder 334, e.g., a phase alternating line (PAL) encoder, a sequential couleur a memoire (SECAM) encoder, or a national television system(s) committee (NTSC) encoder, is coupled to the digital signal processor 324. Further, a video amplifier 336 is coupled to the video encoder 334 and the touch screen display 332. Also, a video port 338 is coupled to the video amplifier 336. As depicted in FIG. 3, a universal serial bus (USB) controller 340 is coupled to the digital signal processor 324. Also, a USB port 342 is coupled to the USB controller 340. A memory 344 and a subscriber identity module (SIM) card 346 may also be coupled to the digital signal processor 324. Further, as shown in FIG. 3, a digital camera 348 may be coupled to the digital signal processor 324. In an exemplary aspect, the digital camera 348 is a charge-coupled device (CCD) camera or a complementary metal-oxide semiconductor (CMOS) camera.

As further illustrated in FIG. 3, a stereo audio CODEC 350 may be coupled to the analog signal processor 326. Moreover, an audio amplifier 352 may coupled to the stereo audio CODEC 350. In an exemplary aspect, a first stereo speaker 354 and a second stereo speaker 356 are coupled to the audio amplifier 352. FIG. 3 shows that a microphone amplifier 358 may be also coupled to the stereo audio CODEC 350. Additionally, a microphone 360 may be coupled to the microphone amplifier 358. In a particular aspect, a frequency modulation (FM) radio tuner 362 may be coupled to the stereo audio CODEC 350. Also, an FM antenna 364 is coupled to the FM radio tuner 362. Further, stereo headphones 366 may be coupled to the stereo audio CODEC 350.

FIG. 3 further indicates that a radio frequency (RF) transceiver 368 may be coupled to the analog signal processor 326. An RF switch 370 may be coupled to the RF transceiver 368 and an RF antenna 372. As shown in FIG. 3, a keypad 374 may be coupled to the analog signal processor 326. Also, a mono headset with a microphone 376 may be coupled to the analog signal processor 326. Further, a vibrator device 378 may be coupled to the analog signal processor 326. FIG. 3 also shows that a power supply 380 may be coupled to the on-chip system 322. In a particular aspect, the power supply 380 is a direct current (DC) power supply that provides power to the various components of the PCD 320 that require power. Further, in a particular aspect, the power supply is a rechargeable DC battery or a DC power supply that is derived from an alternating current (AC) to DC transformer that is connected to an AC power source.

FIG. 3 indicates that the PCD 320 may include a command management module 382. The command management module 382 may be a stand-alone controller or it may be within the memory 344.

FIG. 3 further indicates that the PCD 320 may also include a network card 388 that may be used to access a data network, e.g., a local area network, a personal area network, or any other network. The network card 388 may be a Bluetooth network card, a WiFi network card, a personal area network (PAN) card, a personal area network ultra-low-power technology (PeANUT) network card, or any other network card well known in the art. Further, the network card 388 may be incorporated into a chip, i.e., the network card 388 may be a full solution in a chip, and may not be a separate network card 388.

As depicted in FIG. 3, the touch screen display 332, the video port 338, the USB port 342, the camera 348, the first stereo speaker 354, the second stereo speaker 356, the microphone 360, the FM antenna 364, the stereo headphones 366, the RF switch 370, the RF antenna 372, the keypad 374, the mono headset 376, the vibrator 378, and the power supply 380 are external to the on-chip system 322.

In a particular aspect, one or more of the method steps described herein may be stored in the memory 344 as computer program instructions. These instructions may be executed by a processor 324, 326 in order to perform the methods described herein. Further, the processors 324, 326, the memory 344, the command management module 382, the display controller 328, the touch screen controller 330, or a combination thereof may serve as a means for executing one or more of the method steps described herein in order to control a virtual keyboard displayed at the display/touch screen 332.

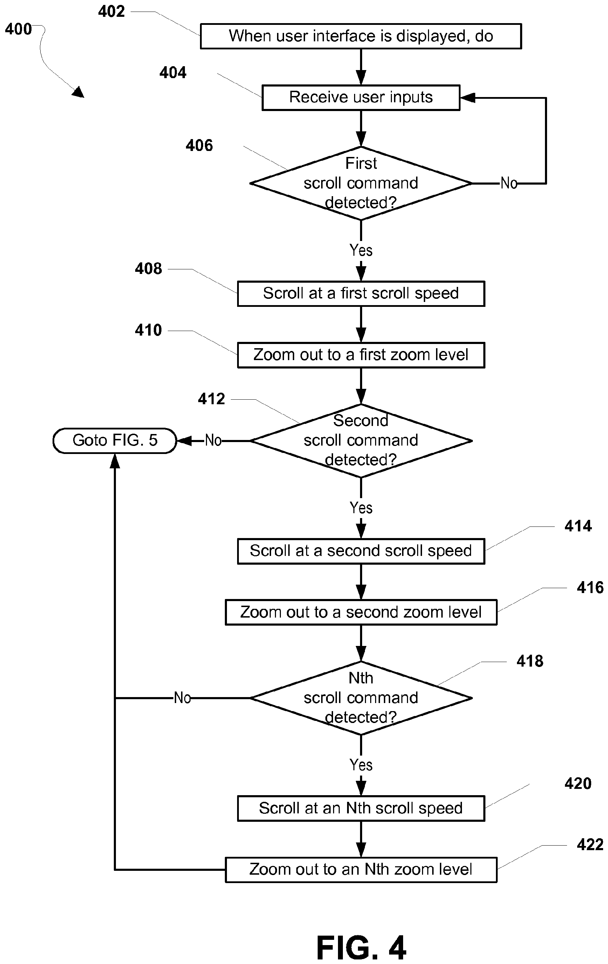

Referring now to FIG. 4, a method of controlling scroll operations within a user interface of an electronic device is shown. Commencing at block 402, a do loop may be entered in which when a user interface is displayed, the following steps may be performed. At block 404, one or more user inputs may be received via the user interface. Moving to decision 406, a command management module may determine whether a first scroll command is detected. If not, the method 400 may return to block 404 and continue as described herein. Otherwise, if a first scroll command is detected, the method 400 may proceed to block 408 and the user interface may scroll through a plurality of items at a first scroll speed. Moreover, at block 410, the user interface may zoom out to a first zoom level. The zoom operation may occur immediately after the scroll command. Alternatively, the zoom operation may occur after a predetermined time of scrolling at the first scroll speed.

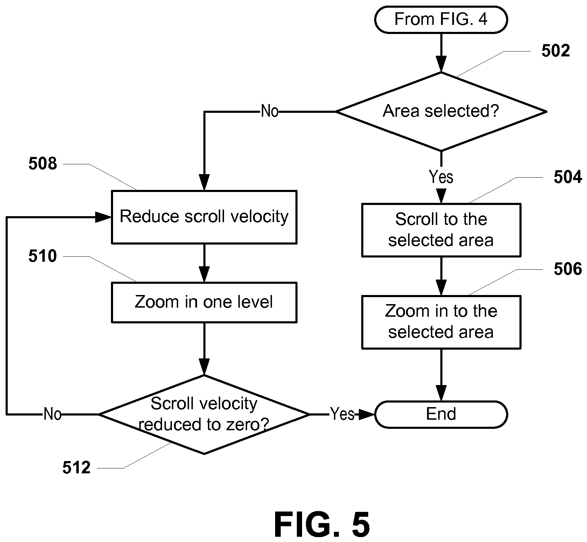

Proceeding to decision 412, the command management module may determine whether a second scroll command is detected. If a second scroll command is not detected, the method 400 may proceed directly to decision 502 of FIG. 5 and the method 400 may continue as described herein. On the other hand, if a second scroll command is detected at decision 412, the method 400 may proceed to block 414 and the user interface may scroll at a second scroll speed. Thereafter, the user interface may zoom out to a second zoom level at block 416.

Continuing to decision 418, the command management module may determine whether an Nth scroll command is detected. If an Nth scroll command is not detected, the method 400 may proceed directly to decision 502 of FIG. 5 and the method 400 may continue as described herein. Conversely, if an Nth scroll command is detected at decision 418, the method 400 may proceed to block 420 and the user interface may scroll at an Nth scroll speed. Next, the user interface may zoom out to an Nth zoom level at block 422. The method 400 may then proceed to decision 502 of FIG. 5. In a particular aspect, there may exist an infinite number of scroll speeds. Alternatively, there may be an optional maximum scroll speed.

At decision 502, the command management module may determine whether an area of the display is selected. If an area is selected, the method 400 may proceed to block 504 and the user interface may scroll to the selected area. Thereafter, at block 506, the user interface may zoom in to the selected area. The method 400 may then end.

Returning to decision 502, if an area is not selected, the method 400 may proceed to block 508 and the scroll velocity may be reduced. Thereafter, at block 510, the user interface may zoom in one level. Moving to decision 512, the user interface, or a controller thereof, may determine whether a scroll velocity is reduced to zero. If the scroll velocity is zero, the method may end. Otherwise, if the scroll velocity is not reduced to zero, the method may return to block 508 and continue as described herein.

In another aspect, decision 512 may include a decision that determines whether a minimum zoom is reached. In such, a case, when a minimum zoom is reached, the method may end. Otherwise, the method may return to block 508 and continue as described herein.

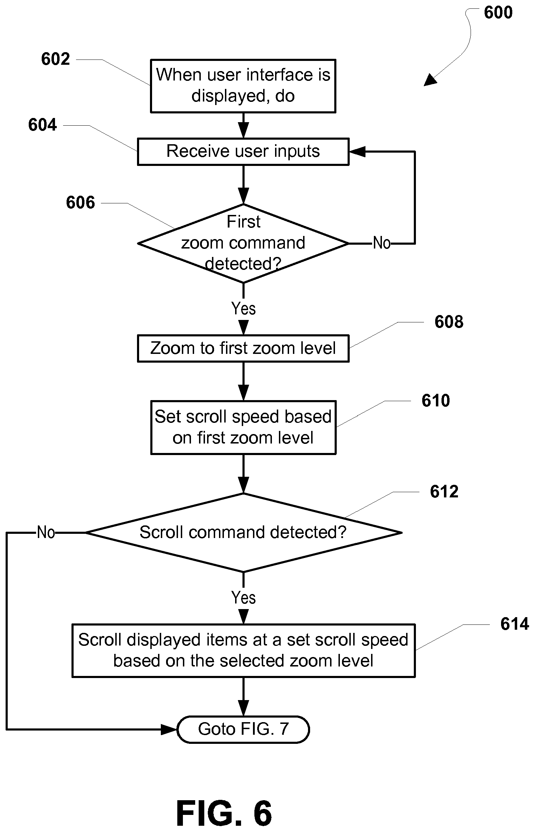

Referring now to FIG. 6, another aspect of a method of controlling scroll operations within a user interface of an electronic device is shown. Beginning at block 602, a do loop may be entered in which when a user interface is displayed, the following steps may be performed. At block 604, one or more user inputs may be received via the user interface. Moving to decision 606, a command management module may determine whether a first zoom command is detected. If a zoom command is not detected, the method 600 may return to block 604 and continue as described herein. On the other hand, if a zoom command is detected at decision 606, the method 600 may proceed to block 608 and the user interface may zoom to a first zoom level. Then, at block 610, the user interface may set a scroll speed based on the first zoom level.

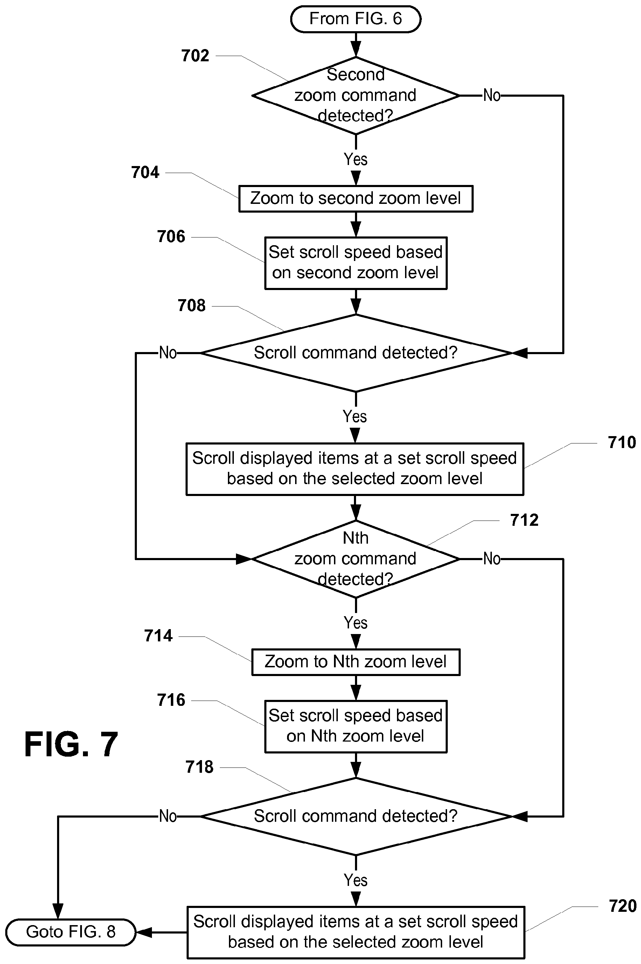

Moving to decision 612, the command management module may determine whether a scroll command is detected. If a scroll command is not detected, the method 600 may continue to decision 702 of FIG. 7. Conversely, if a scroll command is detected, the method 600 may proceed to block 614 and the user interface may scroll displayed items at a set scroll speed based on the selected zoom level. Thereafter, the method 600 may proceed to decision 702 of FIG. 7.

At decision 702 of FIG. 7, the command management module may determine whether a second zoom command is detected. If a second zoom command is detected at decision 606, the method 600 may proceed to block 704 and the user interface may zoom to a second zoom level. Next, at block 706, the user interface may set a scroll speed based on the second zoom level. Thereafter, from block 706, the method 600 may proceed to decision 708 and continue as described herein. Returning to decision 702, if a second zoom command is not detected, the method 600 may proceed directly to decision 708.

At decision 708, the command management module may determine whether a scroll command is detected. If a scroll command is detected, the method 600 may proceed to block 710 and the user interface may scroll displayed items at a set scroll speed based on the selected zoom level. The method 600 may then proceed to decision 712 and continue as described herein. Returning to decision 708, if a scroll command is not detected, the method 600 may proceed directly to decision 712.

At decision 712, the command management module may determine whether an Nth zoom command is detected. If an Nth zoom command is detected, the method 600 may proceed to block 714 and the user interface may zoom to an Nth zoom level. Then, at block 716, the user interface may set a scroll speed based on the Nth zoom level. Thereafter, from block 716, the method 600 may proceed to decision 718 and continue as described herein. Returning to decision 712, if an Nth zoom command is not detected, the method 600 may proceed directly to decision 718.

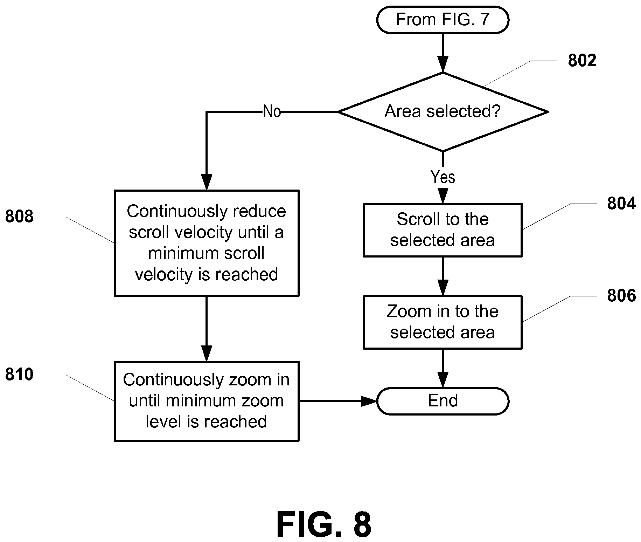

At decision 718, the command management module may determine whether a scroll command is detected. If a scroll command is detected, the method 600 may proceed to block 720 and the user interface may scroll displayed items at a set scroll speed based on the selected zoom level. The method 600 may then proceed to decision 802 of FIG. 8 and continue as described herein. Returning to decision 718, if a scroll command is not detected, the method 600 may proceed directly to decision 802 of FIG. 8.

At decision 802 of FIG. 8, the command management module may determine whether an area of the display is selected. If an area is selected, the method 600 may proceed to block 804 and the user interface may scroll to the selected area. Thereafter, at block 806, the user interface may zoom in to the selected area. The method 600 may then end.

Returning to decision 802, if an area is not selected, the method 600 may proceed to block 808 and the user interface may continuously reduce the scroll velocity until a minimum scroll velocity is reached. Thereafter, at block 810, the user interface may continuously zoom in until a minimum zoom level is reached. The method 600 may then end.

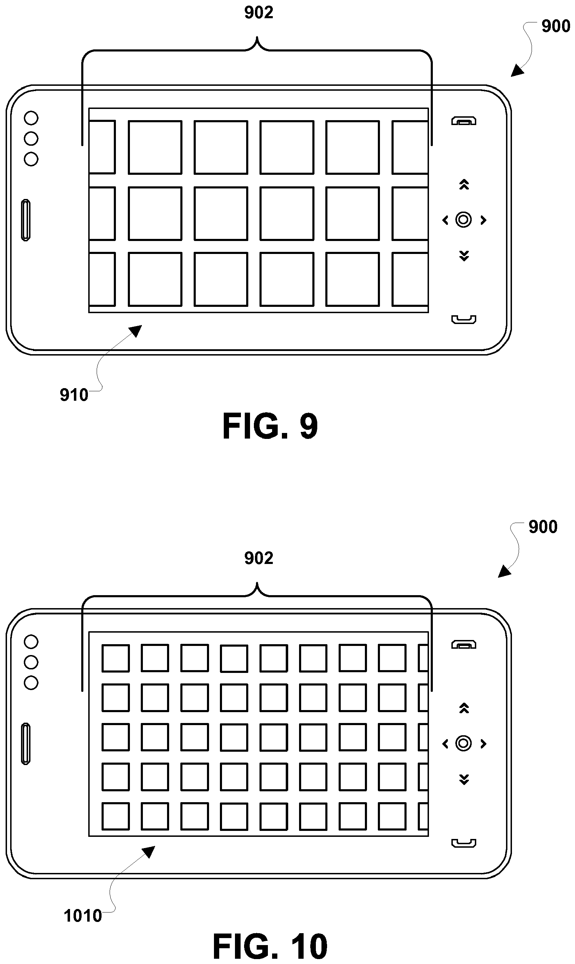

Referring now to FIG. 9 through FIG. 11, a third aspect of a PCD is shown and is generally designated 900. As shown, a plurality of user interface items 902 may be displayed at the PCD 900. The user interface items 902 may include one or more application icons, one or more thumbnails, one or more tiles, or a combination thereof.

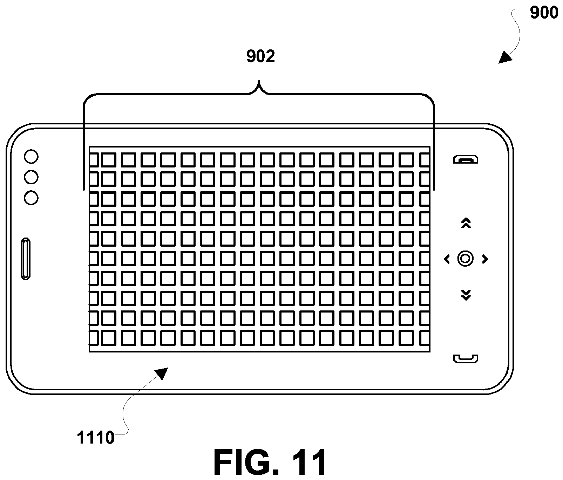

As shown in FIG. 9, the user interface items 902 may be displayed at a first zoom level 910. The first zoom level 910 may be considered a base zoom level, a minimal zoom level, or a starting zoom level, at which the user interface items 902 are shown in their largest sizes. FIG. 10 shows the user interface items 902 at a second zoom level 1010 in which the user interface items 902 are shown in a smaller size. In other words, the second zoom level 1010 is a zoom out from the first zoom level 910. FIG. 11 shows the user interface items 902 at an Nth zoom level 1110 in which the user interface items 902 are shown in yet another smaller size. In other words, the Nth zoom level 1110 is a zoom out from the second zoom level 1010.

In a particular aspect, a first scroll speed may be associated with the first zoom level 910, a second scroll speed may be associated with the second zoom level 1010, and an Nth scroll speed may be associated with the Nth zoom level 1110. In a particular aspect, the more items displayed at the PCD 900, the faster the scroll speed may be. For example, as a user zooms from the first zoom level 910 to the second zoom level 1010, a scroll speed may transition, or change, from the first scroll speed to the second scroll speed. The second scroll speed may be faster than the first scroll speed. Further, as the user zooms from the second zoom level 1010 to the Nth zoom level 1110, the scroll speed may transition, or change, from the second scroll speed to the Nth scroll speed. The Nth scroll speed may be faster from the second scroll speed. As fewer items are displayed, e.g., the zoom level is zoomed in, the scroll speed may slow.

In another aspect, as a user changes scroll speeds, e.g., increases scroll speeds, the zoom level may change. For example, as the user scrolls from the first scroll speed to the second scroll speed, the zoom level may transition, or change, from the first zoom level 910 to the second zoom level 1010. More items may be displayed in the second zoom level 1010 than in the first zoom level 910. Further, as the user scrolls from the second scroll speed to the Nth scroll speed, the zoom level may transition, or change, from the second zoom level 1010 to the Nth zoom level 1110. More items may be displayed in the Nth zoom level 1110 than in the second zoom level 1010. As the scroll speed slows, fewer items may be displayed at the PCD 900.

It is to be understood that the method steps described herein need not necessarily be performed in the order as described. Further, words such as "thereafter," "then," "next," etc. are not intended to limit the order of the steps. These words are simply used to guide the reader through the description of the method steps. Moreover, the methods described herein are described as executable on a portable computing device (PCD). The PCD may be a mobile telephone device, a portable digital assistant device, a smartbook computing device, a netbook computing device, a laptop computing device, a desktop computing device, or a combination thereof.

The methods disclosed herein provide ways to scroll through items displayed on a touch screen user interface. In one aspect, when a user scrolls through a group of items at a first scroll speed, the display can zoom to a first zoom level in which a plurality of items is displayed. When a user scrolls through the items at a second scroll speed, the display can zoom to a second zoom level in which another plurality of items is displayed. If the user scrolls faster, the display may zoom out and a greater number of items may be displayed. If the user scrolls slower, the display may zoom in and a lesser number of items may be displayed. If a user scrolls and does not increase or decrease the scroll speed, the scroll speed may slowly reduce, as if by friction, to a minimum speed or until the scroll speed halts. As the scroll speed reduces, the display may zoom in and a number of items displayed may decrease.

In another aspect, as a user zooms out and more items are presented to a user, a scroll speed may be increased. Further, as a user continues to zoom out and even more items are presented, the scroll speed may continue to increase. Conversely, as a user zooms in and fewer items are presented to a user, a scroll speed may be decreased. If a user does not zoom in or out, the zoom may slowly zoom in to a minimum zoom level and the scroll speed may slowly reduce, as if by friction, to a minimum speed or until the scroll speed halts.

In one or more exemplary aspects, the functions described may be implemented in hardware, software, firmware, or any combination thereof. If implemented in software, the functions may be stored on or transmitted over as one or more instructions or code on a machine readable medium, i.e., a computer-readable medium. Computer-readable media includes both computer storage media and communication media including any medium that facilitates transfer of a computer program from one place to another. A storage media may be any available media that may be accessed by a computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

Although selected aspects have been illustrated and described in detail, it will be understood that various substitutions and alterations may be made therein without departing from the scope of the present invention, as defined by the following claims.

## Claims

1. A method (600) of scrolling items on a touch screen user interface, the method comprising:
receiving (604) user inputs via the touch screen user interface;
detecting (606) a first zoom command via the touch screen user interface;
zooming (608) to a first zoom level; and
setting (610) a first scroll speed, wherein the first scroll speed is associated with the first zoom level;
detecting (612) a scroll command via the touch screen user interface; and
scrolling (614) a plurality of displayed items at the first scroll speed; **characterised by**:
continuously changing the zoom level to a base zoom level at which the user interface elements are shown in their largest sizes and continuously reducing the scroll speed, as if by friction, to a minimum scroll speed, if no other user inputs are detected via the touch screen user interface.

2. The method of claim 1, further comprising:
detecting (702) a second zoom command;
zooming (704) to a second zoom level; and
setting (706) a second scroll speed, wherein the second scroll speed is associated with the second zoom level.

3. The method of claim 2, further comprising:
detecting (708) a second scroll command; and
scrolling (710) a plurality of displayed items at the second scroll speed.

4. The method of claim 3, further comprising:
detecting (712) an Nth zoom command;
zooming (714) to an Nth zoom level; and
setting (716) an Nth scroll speed, wherein the Nth scroll speed is associated with the Nth zoom level.

5. The method of claim 4, further comprising:
detecting (718) a Nth scroll command; and
scrolling (720) a plurality of displayed items at the Nth scroll speed.

6. A portable computing device (300), comprising:
means (332) for receiving user inputs;
means (330; 324) for detecting a first zoom command via the means for receiving user inputs;
means (328; 332) for zooming to a first zoom level; and
means (328; 324) for setting a first scroll speed, wherein the first scroll speed is associated with the first zoom level;
means (330; 324) for detecting a scroll command via the means for receiving user inputs; and
means (328; 332) for scrolling a plurality of displayed items at the first scroll speed; **characterised by**:
means for continuously changing the zoom level to a base zoom level at which the user interface elements are shown in their largest sizes and continuously reducing the scroll speed, as if by friction, to a minimum scroll speed, if no other user inputs are detected via the touch screen user interface.

7. The device of claim 6, further comprising:
means for detecting a second zoom command;
means for zooming to a second zoom level; and
means for setting a second scroll speed, wherein the second scroll speed is associated with the second zoom level.

8. The device of claim 7, further comprising:
means for detecting a second scroll command; and
means for scrolling a plurality of displayed items at the second scroll speed.

9. The device of claim 8, further comprising:
means for detecting an Nth zoom command;
means for zooming to an Nth zoom level; and
means for setting an Nth scroll speed, wherein the Nth scroll speed is associated with the Nth zoom level.

10. The device of claim 9, further comprising:
means for detecting a Nth scroll command; and
means for scrolling a plurality of displayed items at the Nth scroll speed.

11. The device of any of the preceding claims 6 to 10, wherein the means for receiving user inputs comprises a touch screen user interface.

12. A computer program comprising instructions for carrying out a method according to any of claims 1 to 5 when run on a computer.

## Patentansprüche

1. Verfahren (600) zum Scrollen von Elementen auf einer Berührungsbildschirm-Benutzerschnittstelle, das Verfahren aufweisend:
Empfangen (604) von Benutzereingaben mittels der Berührungsbildschirm-Benutzerschnittstelle;
Detektieren (606) eines ersten Zoom-Befehls über der Berührungsbildschirm-Benutzerschnittstelle;
Zoomen (608) auf einer ersten Zoom-Ebene; und
Setzen (610) einer ersten Scroll-Geschwindigkeit, wobei die erste Scroll-Geschwindigkeit mit der ersten Zoom-Ebene assoziiert ist;
Detektieren (612) eines Scroll-Befehls mittels der Berührungsbildschirm-Benutzerschnittstelle; und
Scrollen (614) einer Vielzahl von dargestellten Elementen bei einer ersten Scroll-Geschwindigkeit; **gekennzeichnet durch**:
Kontinuierliches Verändern der Zoom-Ebene auf eine Grund-Zoom-Ebene bei der die Benutzerschnittstellen-Elemente bei ihren größten Größen dargestellt werden und kontinuierliches Reduzieren der Scroll-Geschwindigkeit, wie bei Friktion, auf einer minimalen Scroll-Geschwindigkeit, wenn keine andere Benutzereingaben mittels der Berührungsbildschirm-Benutzerschnittstelle detektiert werden.

2. Das Verfahren gemäß Anspruch 1, ferner aufweisend:
Detektieren (702) eines zweiten Zoom-Befehls;
Zoomen (704) auf eine zweite Zoom-Ebene; und
Setzen (706) einer zweiten Scroll-Geschwindigkeit, wobei die zweite Scroll-Geschwindigkeit mit der zweiten Zoom-Ebene assoziiert ist.

3. Das Verfahren gemäß Anspruch 2, ferner aufweisend:
Detektieren (708) eines zweiten Zoom-Befehls; und
Scrollen (710) einer Vielzahl von dargestellten Elementen bei der zweiten Scroll-Geschwindigkeit.

4. Das Verfahren gemäß Anspruch 3, ferner aufweisend:
Detektieren (712) eines N-ten Zoom-Befehls;
Zoomen (714) auf eine N-te Zoom-Ebene; und
Setzen (716) eine N-te Scroll-Geschwindigkeit, wobei die N-te Scroll-Geschwindigkeit mit der N-ten Zoom-Ebene assoziiert ist.

5. Das Verfahren gemäß Anspruch 4, ferner aufweisend:
Detektieren (718) eines N-ten Scroll-Befehls; und
Scrollen (720) einer Vielzahl von dargestellten Elementen auf der N-ten Scroll-Geschwindigkeit.

6. Ein tragbares Computergerät (300), aufweisend:
Mittel (332) zum Empfangen von Benutzereingaben;
Mittel (330; 324) zum Detektieren eines ersten Zoom-Befehls über das Mittel zum Empfangen von Benutzereingaben;
Mittel (328; 332) zum Zoomen auf einer ersten Zoom-Ebene; und
Mittel (328; 324) zum Setzen einer ersten Scroll-Geschwindigkeit, wobei die erste Scroll-Geschwindigkeit mit der ersten Zoom-Ebene assoziiert ist;
Mittel (330; 324) zum Detektieren eines Scroll-Befehls über das Mittel zum Empfangen von Benutzereingaben; und
Mittel (328; 332) zum Scrollen einer Vielzahl von dargestellten Elementen bei einer ersten Scroll-Geschwindigkeit; **gekennzeichnet durch**:
Kontinuierliches Verändern der Zoom-Ebene auf eine Grund-Zoom-Ebene bei der die Benutzerschnittstellen-Elemente bei ihren größten Größen dargestellt werden und kontinuierliches Reduzieren der Scroll-Geschwindigkeit, wie bei Friktion, auf einer minimalen Scroll-Geschwindigkeit, wenn keine andere Benutzereingaben mittels der Berührungsbildschirm-Benutzerschnittstelle detektiert werden.

7. Das Gerät gemäß Anspruch 6, ferner aufweisend:
Mittel zum Detektieren eines zweiten Zoom-Befehls;
Mittel zum Zoomen auf eine zweite Zoom-Ebene; und
Mittel zum Setzen einer zweiten Scroll-Geschwindigkeit, wobei die zweite Scroll-Geschwindigkeit mit der zweiten Zoom-Ebene assoziiert ist.

8. Das Gerät gemäß Anspruch 7, ferner aufweisend:
Mittel zum Detektieren eines zweiten Zoom-Befehls; und
Mittel zum Scrollen einer Vielzahl von dargestellten Elementen bei der zweiten Scroll-Geschwindigkeit.

9. Das Gerät gemäß Anspruch 8, ferner aufweisend:
Mittel zum Detektieren eines N-ten Zoom-Befehls;
Mittel zum Zoomen auf eine N-te Zoom-Ebene; und
Mittel zum Setzen eine N-te Scroll-Geschwindigkeit, wobei die N-te Scroll-Geschwindigkeit mit der N-ten Zoom-Ebene assoziiert ist.

10. Das Gerät gemäß Anspruch 9, ferner aufweisend:
Mittel zum Detektieren eines N-ten Scroll-Befehls; und
Mittel zum Scrollen einer Vielzahl von dargestellten Elementen auf der N-ten Scroll-Geschwindigkeit.

11. Das Gerät gemäß einem der vorangegangenen Ansprüche 6 bis 10, wobei das Mittel zum Empfangen von Benutzereingaben eine Berührungsbildschirm-Benutzerschnittstelle umfasst.

12. Ein Computerprogramm, welches Befehle aufweist, zum Durchführen eines Verfahrens gemäß einem der Ansprüche 1 bis 5, wenn es von einem Computer ausgeführt wird.

## Revendications

1. Procédé (600) de défilement d'éléments sur une interface utilisateur d'écran tactile, le procédé comprenant :
la réception (604) d'entrées d'utilisateur par le biais de l'interface utilisateur d'écran tactile ;
la détection (606) d'une première commande d'agrandissement par le biais de l'interface utilisateur d'écran tactile ;
l'agrandissement (608) à un premier niveau d'agrandissement ; et
le réglage (610) d'une première vitesse de défilement,
dans lequel la première vitesse de défilement est associée au premier niveau d'agrandissement ;
la détection (612) d'une commande de défilement par le biais de l'interface utilisateur d'écran tactile ; et
le défilement (614) d'une pluralité d'éléments affichés à la première vitesse de défilement ;
**caractérisé par** :
le changement continu du niveau d'agrandissement à un niveau d'agrandissement de base auquel les éléments d'interface utilisateur sont présentés dans leurs plus grandes tailles et la réduction continue de la vitesse de défilement, comme par friction, à une vitesse de défilement minimale, si aucune autre entrée d'utilisateur n'est détectée par le biais de l'interface utilisateur d'écran tactile.

2. Procédé selon la revendication 1, comprenant en outre :
la détection (702) d'une deuxième commande d'agrandissement ;
l'agrandissement (704) à un deuxième niveau d'agrandissement ; et
le réglage (706) d'une deuxième vitesse de défilement, dans lequel la deuxième vitesse de défilement est associée au deuxième niveau d'agrandissement.

3. Procédé selon la revendication 2, comprenant en outre :
la détection (708) d'une deuxième commande de défilement ; et
le défilement (710) d'une pluralité d'éléments affichés à la deuxième vitesse de défilement.

4. Procédé selon la revendication 3, comprenant en outre :
la détection (712) d'une N-ième commande d'agrandissement ;
l'agrandissement (714) à un N-ième niveau d'agrandissement ; et
le réglage (716) d'une N-ième vitesse de défilement, dans lequel la N-ième vitesse de défilement est associée au N-ième niveau d'agrandissement.

5. Procédé selon la revendication 4, comprenant en outre :
la détection (718) d'une N-ième commande de défilement ; et
le défilement (720) d'une pluralité d'éléments affichés à la N-ième vitesse de défilement.

6. Dispositif informatique portable (300) comprenant :
des moyens (332) pour la réception d'entrées d'utilisateur ;
des moyens (330 ; 324) pour la détection d'une première commande d'agrandissement par le biais des moyens pour la réception d'entrées d'utilisateur ;
des moyens (328 ; 332) pour l'agrandissement à un premier niveau d'agrandissement ; et
des moyens (328 ; 324) pour le réglage d'une première vitesse de défilement, dans lequel la première vitesse de défilement est associée au premier niveau d'agrandissement ;
des moyens (330 ; 324) pour la détection d'une commande de défilement par le biais des moyens pour la réception d'entrées d'utilisateur ; et
des moyens (328 ; 332) pour le défilement d'une pluralité d'éléments affichés à la première vitesse de défilement ;
**caractérisé par** :
des moyens pour le changement continu du niveau d'agrandissement à un niveau d'agrandissement de base auquel les éléments d'interface utilisateur sont présentés dans leurs plus grandes tailles et la réduction continue de la vitesse de défilement, comme par friction, à une vitesse de défilement minimale, si aucune autre entrée d'utilisateur n'est détectée par le biais de l'interface utilisateur d'écran tactile.

7. Dispositif selon la revendication 6, comprenant en outre :
des moyens pour la détection d'une deuxième commande d'agrandissement ;
des moyens pour l'agrandissement à un deuxième niveau d'agrandissement ; et
des moyens pour le réglage d'une deuxième vitesse de défilement, dans lequel la deuxième vitesse de défilement est associée au deuxième niveau d'agrandissement.

8. Dispositif selon la revendication 7, comprenant en outre :
des moyens pour la détection d'une deuxième commande de défilement ; et
des moyens pour le défilement d'une pluralité d'éléments affichés à la deuxième vitesse de défilement.

9. Dispositif selon la revendication 8, comprenant en outre :
des moyens pour la détection d'une N-ième commande d'agrandissement ;
des moyens pour l'agrandissement à un N-ième niveau d'agrandissement ; et
des moyens pour le réglage d'une N-ième vitesse de défilement, dans lequel la N-ième vitesse de défilement est associée au N-ième niveau d'agrandissement.

10. Dispositif selon la revendication 9, comprenant en outre :
des moyens pour la détection d'une N-ième commande de défilement ; et
des moyens pour le défilement d'une pluralité d'éléments affichés à la N-ième vitesse de défilement.

11. Dispositif selon l'une quelconque des revendications précédentes 6 à 10, dans lequel les moyens pour la réception d'entrées d'utilisateur comprennent une interface utilisateur d'écran tactile.

12. Programme informatique comprenant des instructions pour exécuter un procédé selon l'une quelconque des revendications 1 à 5, quand elles sont exécutées sur un ordinateur.
